# FASCICULE DE BREVET EUROPEEN

(11) **EP 1 791 654 B1**
(45) Date de publication et mention de la délivrance du brevet: **16.01.2008**
(21) Numéro de dépôt: 05798594.7
(22) Date de dépôt: 24.08.2005
(51) Int. Cl.: B05D 5/08, A01N 59/16

(54) **ARTICLE CULINAIRE COMPRENANT UN REVETEMENT ANTI-ADHESIF**
TEFLONBESCHICHTETE KOCHUTENSILIEN
TEFLON-COATED COOKING UTENSIL

(30) Priorité: 24.08.2004 FR 0409057
(43) Date de publication de la demande: 06.06.2007
(73) Titulaire: SEB SA, 69130 Ecully (FR)
(72) Inventeur: FONTAINE, Michel, F-74150 Sales (FR); VOISIN, Laurent, F-74150 Sales (FR); GARDAZ, Claudine, Bloye F-74150 Rumilly (FR)
(74) Mandataire: Pichat, Thierry
(86) Numéro de dépôt international: PCT/FR2005/002136
(87) Numéro de publication internationale: WO 2006/024799

(56) Documents cités:
- EP-A- 1 016 466
- WO-A-02/087339
- US-A- 5 405 644
- US-A1- 2004 115 477
- US-B1- 6 382 454

## Description

La présente invention concerne un article culinaire tel qu'une poêle, une casserole, une sauteuse, comportant un revêtement anti-adhésif.

Ce revêtement anti-adhésif, qui doit présenter une excellente anti-adhérence, est de manière courante destiné à former au moins la surface intérieure de l'article culinaire afin de permettre une cuisson des aliments en minimisant au maximum les risques d'accrochage des aliments et d'assurer un nettoyage optimal et aisé de l'article culinaire après utilisation.

Un tel revêtement anti-adhésif comprend généralement au moins une couche à base de résine thermostable résistant à au moins 200°C, cette résine thermostable comprenant classiquement une résine fluorocarbonée, seule ou mélangée avec une ou plusieurs autres résines thermostables résistant à au moins 200°C.

Cette résine fluorocarbonée peut être du polytétrafluoroéthylène (PTFE), du copolymère de tétrafluoroéthylène et de perfluoropropylvinyléther (PFA) ou du copolymère de tétrafluoroéthylène et d'hexafluoropropylène (FEP) ou un mélange de ces résines fluorocarbonées.

Les autres résines thermostables résistant à au moins 200°C peuvent être un polyamide imide (PAI), une sulfone de polyéthylène (PES), un sulfure de polyphénylène (PPS), une polyéthercétone (PEK), une polyétheréthercétone (PEEK) ou une silicone.

Cependant malgré des nettoyages ménagers minutieux de ce type de revêtements anti-adhésifs, on observe le développement de microorganismes, notamment de microbes, et en particulier de bactéries, au moins au niveau de la surface du revêtement anti-adhésif.

Le développement de microorganismes et leur prolifération ultérieure s'expliquent par la présence de porosités dans le revêtement à base de résine fluorocarbonée. En effet, les microorganismes peuvent se développer à partir des résidus alimentaires, qui n'ont pas été éliminés lors du nettoyage, et/ou de souillures, ces résidus et souillures s'étant logés dans les porosités du revêtement.

Le développement des microorganismes est encore augmenté au cours des cycles répétés d'utilisation de l'article culinaire, du fait de l'usure du revêtement, et notamment en raison de la présence de rayures à sa surface. En effet, les rayures augmentent encore le nombre de sites au sein desquels les microorganismes peuvent se développer.

S'il est admis que les cuissons à hautes températures, d'au moins 150°C, permettent d'éliminer la plupart de ces microorganismes, il n'en est pas de même lors du réchauffage, à de faibles températures, d'aliments ou encore lors du stockage, à basse température ou à température ambiante, de ces mêmes aliments directement dans l'article culinaire. Le document US2004/0115477 décrit un article culinaire selon le préambule de la revendication 1.

Le but de la présente invention est donc de remédier au problème de développement des microorganismes au sein d'un revêtement anti-adhésif, à base d'une ou de plusieurs résines fluorocarbonées, d'un article culinaire, sans toutefois faire perdre au dit revêtement anti-adhésif son caractère d'anti-adhérence et ce, quelles que soient les conditions d'utilisation de l'article culinaire, que ce soit pour le stockage, le réchauffage ou encore la cuisson des aliments.

L'article culinaire selon l'invention comprend un support métallique recouvert par un revêtement anti-adhésif, ce revêtement étant destiné à former au moins la surface intérieure de l'article culinaire et comprenant au moins une couche, ladite couche comprenant une résine fluorocarbonée seule ou mélangée avec une seconde résine thermostable résistant à au moins 200°C.

Suivant l'invention, la au moins une couche comprend un composé minéral qui résiste à des températures supérieures à la température de frittage de la ou des résines et qui présente des propriétés anti-microbiennes, par contact des microorganismes, éventuellement présents sur le revêtement anti-adhésif, soit directement avec le composé minéral soit avec les ions du dit minéral et qui sont diffusés par ce composé, soit par contact combiné.

Le composé minéral selon l'invention permet de conférer les propriétés anti-microbiennes recherchées pour le revêtement anti-adhésif, sans modifier fondamentalement les compositions classiquement utilisées pour la réalisation de tels revêtements anti-adhésifs.

En effet, le composé minéral se comporte comme n'importe quelle autre charge minérale telles que charges de renfort ou pigments, sans altérer les propriétés anti-adhésives conférées par la ou les résines formant le revêtement.

En particulier, les procédés de fabrication d'articles culinaires ne sont pas remis en question par la nouvelle composition du revêtement anti-adhésif.

Ainsi, de manière tout à fait classique, le composé minéral peut être introduit à l'état sec, ou sous forme d'une dispersion aqueuse, dans les compositions de couches comprenant au moins la résine fluorocarbonée. On réalise ainsi une couche homogène comprenant une résine fluorocarbonée et le composé minéral.

L'article culinaire selon l'invention comprend un revêtement anti-adhésif formé d'au moins une couche.

Cette couche comprend le composé minéral présentant des propriétés anti-microbiennes ainsi qu'une résine fluorocarbonée.

La résine fluorocarbonée peut comprendre au moins un composé choisi parmi le PTFE, le PFA et le FEP couramment utilisés dans les compositions de revêtements anti-adhésifs.

Cette couche peut en outre également comprendre une seconde résine thermostable résistant à au moins 200°C et comprenant au moins un composé choisi parmi un PAI, une PES, un PPS, une PEK, une PEEK et une silicone.

Le composé minéral étant choisi de telle manière qu'il résiste à des températures supérieures à la température de frittage des résines mises en oeuvre dans le revêtement anti-adhésif, il conserve intactes ses propriétés anti-microbiennes, non seulement après l'étape de frittage, mais également au cours des cuissons ultérieures des aliments opérées par l'utilisateur. Ce composé doit au moins résister, pendant une durée de 10 minutes, à une température de cuisson ou frittage de l'ordre de 400 à 420°C.

Il est précisé que le composé minéral mis en oeuvre dans le cadre de la présente invention doit également résister dans le temps aux produits de nettoyage ainsi qu'aux divers cycles de lavage en lave-vaisselle.

Ce composé minéral étant par ailleurs présent dans toute l'épaisseur de la couche formant le revêtement anti-adhésif, et non pas seulement en surface, l'activité anti-microbienne du revêtement est conservée même en cas de rayures et/ou d'usure du revêtement. En effet, les éventuels microorganismes présents dans les porosités situées dans la couche de revêtement anti-adhésif entreront nécessairement en contact avec le composé minéral anti-microbien et/ou avec les ions qu'il pourrait diffuser.

Bien évidemment, le composé minéral mis en oeuvre dans le cadre de la présente invention doit être compatible avec un usage alimentaire.

Dans une version avantageuse de l'invention, le composé minéral est un composé susceptible de relarguer des ions argent.

On connaît en effet les propriétés anti-microbiennes et bactéricides de l'argent, utilisé notamment en milieu médical et pour l'assainissement.

Toutefois, l'utilisation d'un composé minéral, tel que incluant de l'argent, dans le domaine alimentaire n'était envisagée jusqu'à ce jour que pour des récipients composés de ce matériau ou recouverts par celui-ci mais pour des usages de table et non de cuisson et de toute façon pas pour leurs éventuelles caractéristiques anti-microbiennes. On peut notamment se référer aux dispositions réglementaires qui définissent qu'une eau, pour être qualifiée de "potable", doit contenir moins de 10 µg/l d'argent. De telles valeurs de tolérance si faibles ont ainsi toujours dissuadé clairement un homme du métier de mettre en oeuvre un composé minéral tel que de l'argent pour une application alimentaire dans des ustensiles de cuisine devant être chauffés.

L'utilisation d'un composé minéral tel que l'argent n'a ainsi jamais été envisagé pour ses propriétés anti-microbiennes dans des compositions de revêtements anti-adhésifs d'articles culinaires employés pour le réchauffage ou la cuisson d'aliments.

Surmontant ce préjugé, l'inventeur a utilisé malgré cela un composé minéral contenant de l'argent dans la composition de la couche formant un revêtement anti-adhésif pour un ustensile destiné à être utilisé pour le chauffage et/ou la cuisson d'aliments : il a fait des essais avec des teneurs pondérales très faibles, de telle façon qu'elles ne présentent aucune toxicité pour l'utilisateur d'articles culinaires recouverts d'un tel revêtement, ce qui constitue par ailleurs un avantage économique indéniable.

Il a pu alors constater, d'une manière surprenante qu'il obtenait, malgré cette faible teneur pondérale de composé minéral, de très bons résultats en matière de réduction de microorganismes, en particulier dans le cas où la au moins une couche formant le revêtement anti-adhésif comprend, après frittage, de 0,1 à 0,2 % en poids d'argent.

Un premier composé minéral anti-microbien particulièrement satisfaisant au regard du but de la présente invention est un phosphate de zirconium qui répond à la formule AgₓNa_{(1-x-y)}H_{y}Zr₂(PO₄)₃.

Un tel composé minéral répondant à la formule ci-dessus est notamment commercialisé sous la marque AlphaSan™ par la société Milliken.

Ce composé AlphaSan™, qui présente un degré de pureté supérieur à 99% ainsi qu'une stabilité thermique supérieure à 1000°C, est une poudre blanche.

Afin de minimiser le moins possible l'apparence du revêtement final, qui présente de manière courante un aspect noir et pailleté, on utilisera de préférence le composé minéral de formule AgₓNa_{(1-x-y)}H_{y}Zr₂(PO₄)₃ comprenant 10 % en poids d'argent. Ce dernier est commercialisé à ce jour sous la référence RC 2000.

Un second composé minéral anti-microbien également satisfaisant au regard du but de la présente invention est constitué par un composé composite formé d'un noyau central, par exemple en dioxyde de titane, recouvert d'une couche d'argent.

Un exemple particulier d'un tel composé minéral est commercialisé sous la marque MicroFree™ par la société Du Pont.

L'incorporation du composé minéral doté de propriétés anti-microbiennes peut se faire dans le cas d'un revêtement anti-adhésif ne comportant qu'une seule couche telle que décrite ci-dessus.

La réalisation d'une couche anti-adhésive présentant des propriétés anti-microbiennes peut donc être effectuée en une seule étape, par l'application d'une couche homogène comprenant une résine fluorocarbonée et le composé minéral anti-microbien, les particules de ce composé minéral étant régulièrement réparties dans l'épaisseur de la couche.

Toutefois, de manière classique, les revêtements anti-adhésifs des articles culinaires comprennent au moins une couche primaire d'accrochage et au moins une couche de finition, les couches primaire d'accrochage et de finition étant à base de résine fluorocarbonée, éventuellement mélangée avec une résine thermostable résistant à au moins 200°C.

On se reportera aux exemples de résine fluorocarbonée (PTFE, PFA et FEP) et de résine thermostable résistant à au moins 200°C (PAI, PES, PPS, PEK, PEEK et silicone) déjà indiqués ci-dessus.

On peut ainsi tout à fait envisager un revêtement dans lequel au moins une couche primaire d'accrochage comprend le composé minéral ou encore un revêtement dans lequel au moins une couche de finition comprend le composé minéral.

On peut également envisager d'autres combinaisons, en introduisant le composé minéral doté de propriétés anti-microbiennes dans les compositions d'au moins une couche primaire et d'au moins une couche de finition.

Dans le cas où le composé minéral est incorporé dans une couche primaire d'accrochage et non dans la ou les couches de finition, on limite considérablement son influence quant à la couleur du revêtement anti-adhésif final, ce dernier conservant toutefois son caractère anti-microbien.

Le revêtement anti-adhésif conforme à l'invention et comprenant donc le composé minéral peut être appliqué à tout article culinaire connu pour être recouvert d'un revêtement anti-adhésif.

A titre non limitatif, on citera notamment les casseroles, poêles, moules à gâteaux, plaques de gril, friteuses, auto-cuiseurs ou encore sauteuses.

## Revendications

1. Article culinaire comprenant un support métallique recouvert par un revêtement anti-adhésif, ce revêtement formant au moins la surface intérieure de l'article culinaire et venant en contact avec des aliments en vue de leur stockage, de leur réchauffage ou de leur cuisson dans l'article lorsque ceux-ci y sont placés, ladite surface comprenant au moins une couche qui comprend une résine fluorocarbonée seule ou mélangée avec une seconde résine thermostable résistant à au moins 200°C, **caractérisé en ce que** ladite couche comprend en outre un composé minéral qui résiste à des températures supérieures à la température de frittage de la ou des résines et qui présente des propriétés anti-microbiennes.

2. Article culinaire selon la revendication 1, **caractérisé en ce que** le composé minéral est un composé susceptible de relarguer des ions argent, qui comprend, après frittage, de 0,1 à 0,2 % en poids d'argent.

3. Article culinaire selon la revendication 2, **caractérisé en ce que** le composé minéral est un phosphate de zirconium répondant à la formule AgₓNa_{(1-x-y)}X_{y}H_{y}Zr₂ (PO₄)₃.

4. Article culinaire selon la revendication 3, **caractérisé en ce que** le composé minéral de formule AgₓNa(_{1-x-y})H_{y}Zr₂(PO₄)₃ comprend 10 % en poids d'argent.

5. Article culinaire selon l'une quelconque des revendications 1 à 4, dont le revêtement anti-adhésif comprend au moins une couche primaire d'accrochage et au moins une couche de finition, les couches primaire d'accrochage et de finition étant à base de résine fluorocarbonée, **caractérisé en ce que** l'une au moins de la couche primaire d'accrochage et de la couche de finition comprend le composé minéral.

6. Article culinaire selon l'une quelconque des revendications 1 à 5, **caractérisé en ce que** la résine fluorocarbonée comprend au moins un composé choisi parmi du polytétrafluoroéthylène (PTFE), du copolymère de tétrafluoroéthylène et de perfluoropropylvinyléther (PFA) et du copolymère de tétrafluoroéthylène et d'hexafluoropropylène (FEP).

7. Article culinaire selon l'une quelconque des revendications 1 à 6 **caractérisé en ce que** la seconde résine thermostable résistant à au moins 200°C comprend au moins un composé choisi parmi un polyamide imide (PAI), une sulfone de polyéthylène (PES), un sulfure de polyphénylène (PPS), une polyéthercétone (PEK), une polyétheréthercétone (PEEK) et une silicone.

## Claims

1. A cooking utensil comprising a metal support covered with an anti-adhesive coating, this coating forming at least the inner surface of the cooking utensil and coming into contact with foodstuffs in order to store them, heat them up or cook them in the utensil when they are placed therein, said surface comprising at least one layer which comprises a fluorocarbon resin, either alone or mixed with a second heat-stable resin, resistant to at least 200°C, **characterized in that** said layer further comprises a mineral compound which resists to temperatures above the sintering temperature of the resin(s) and has anti-microbial properties.

2. The cooking utensil according to claim 1, **characterized in that** the mineral compound is a compound able to salt out silver ions, which comprises from 0.1 to 0.2% by weight of silver after sintering.

3. The cooking utensil according to claim 2, **characterized in that** the mineral compound is a zirconium phosphate satisfying the formula AgₓNa_{(1-x-y)}H_{y}Zr₂(PO₄)₃.

4. The cooking utensil according to claim 3, **characterized in that** the mineral compound of formula AgₓNa_{(1-x-y)}H_{y}Zr₂(PO₄)₃ comprises 10% by weight of silver.

5. The cooking utensil according to any of claims 1 to 4, the anti-adhesive coating of which comprises at least one primary adhesion layer, and at least a finishing layer, the primary adhesion and finishing layers being based on fluorocarbon resin, **characterized in that** at least one of the primary adhesion layer and the finishing layer comprises the mineral compound.

6. The cooking utensil according to any of claims 1 to 5, **characterized in that** the fluorocarbon resin comprises at least one compound selected from polytetrafluoroethylene (PTFE), tetrafluoroethylene and perfluoropropylvinylether copolymer (PFA) and tetrafluoroethylene and hexafluoropropylene copolymer (FEP).

7. The cooking utensil according to any of claims 1 to 6, **characterized in that** the second heat stable resin resistant to at least 200°C comprises at least one compound selected from a polyamide imide (PAI), a polyethylene sulfone (PES), a polyphenylene sulphide (PPS), a polyetherketone (PEK), a polyetheretherketone (PEEK) and a silicone.

## Patentansprüche

1. Kochartikel mit einem Metallboden, der mit einer Antihaftbeschichtung überdeckt ist, wobei die Beschichtung wenigstens die Innenfläche des Kochartikels bildet und mit Lebensmitteln zum Zwecke ihrer Aufbewahrung, ihrer Wiederaufwärmung oder ihrer Garung in dem Artikel in Kontakt kommt, wenn diese dort platziert werden, wobei die Oberfläche wenigstens eine Schicht aufweist, die ein Fluorkohlenstoffharz alleine oder gemischt mit einem zweiten wärmestabilen Harz, das wenigstens 200°C aushält, umfasst, **dadurch gekennzeichnet, dass** die zweite Schicht ferner eine mineralische Verbindung umfasst, die höhere Temperaturen als die Sintertemperatur des oder der Harze(s) aushält und die antimikrobielle Eigenschaften aufweist.

2. Kochartikel nach Anspruch 1, **dadurch gekennzeichnet, dass** die mineralische Verbindung eine Silberionen freisetzungsfähige Verbindung ist, die nach der Sinterung von 0,1 bis 0,2 Gew.% Silber aufweist.

3. Kochartikel nach Anspruch 2, **dadurch gekennzeichnet, dass** die mineralische Verbindung ein Zirkonphosphat ist, das der Formel AgₓNa_{(1-x-y)}H_{y}Zr₂(PO₄)₃ entspricht.

4. Kochartikel nach Anspruch 3, **dadurch gekennzeichnet, dass** die mineralische Verbindung mit der Formel AgₓNa_{(1-x-y)}H_{y}Zr₂(PO₄)₃ 10 Gew.% Silber umfasst.

5. Kochartikel nach einem der Ansprüche 1 bis 4, deren Antihaftbeschichtung wenigstens eine primäre Halteschicht und wenigstens eine Abschlussschicht umfasst, wobei die primäre Halteschicht und die Abschlussschicht auf der Basis von Fluorkohlenstoffharz vorliegen, **dadurch gekennzeichnet, dass** wenigstens eine der ersten Halteschicht und der Abschlussschicht die mineralische Verbindung aufweist.

6. Kochartikel nach einem der Ansprüche 1 bis 5, **dadurch gekennzeichnet, dass** das Fluorkohlenstoffharz wenigstens eine Verbindung ausgewählt aus Polytetrafluorethylen (PTFE), dem Copolymer von Tetrafluorethylen und Perfluorpropylvinylether (PFA) und dem Copolymer von Tetrafluorethylen und Hexafluorpropylen (FEP) umfasst.

7. Kochartikel nach einem der Ansprüche 1 bis 6, **dadurch gekennzeichnet, dass** das zweite wärmestabile Harz, das wenigstens 200°C aushält, wenigstens eine Verbindung ausgewählt aus Polyamidimid (PAI), Polyethylensulfon (PES), Polyphenylensulfid (PPS), Polyetherceton (PEK), Polyetheretherceton (PEEK) und Silicon umfasst.
